# EUROPEAN PATENT SPECIFICATION

(11) **EP 3 628 500 B1**
(45) Date of publication and mention of the grant of the patent: **26.07.2023**
(21) Application number: 18425076.9
(22) Date of filing: 28.09.2018
(51) Int. Cl.: B41J 2/21, H04N 1/407

(54) **METHOD AND SYSTEM FOR THE DETECTION AND CORRECTION OF PRINTING DEFECTS AND/OR FOR THE SETUP DURING START-UP PHASE OF A DIGITAL PRINTING DEVICE**
VERFAHREN UND SYSTEM ZUR DETEKTION UND KORREKTUR VON DRUCKDEFEKTEN UND/ODER ZUR EINRICHTUNG WÄHREND DER STARTPHASE EINER DIGITALDRUCKVORRICHTUNG
PROCÉDÉ ET SYSTÈME DE DÉTECTION ET DE CORRECTION DE DÉFAUTS D'IMPRESSION ET/OU DE CONFIGURATION PENDANT LA PHASE DE DÉMARRAGE D'UN DISPOSITIF D'IMPRESSION NUMÉRIQUE

(43) Date of publication of application: 01.04.2020
(73) Proprietor: NEOS S.r.l., 41042 Fiorano Modenese (MO) (IT)
(72) Inventor: Palumbo, Vincenzo, 41042 Fiorano Modenese (MO) (IT)
(74) Representative: Botti & Ferrari S.p.A.

(56) References cited:
- US-A1- 2012 050 377
- US-A1- 2014 313 255
- US-A1- 2018 086 049

## Description

### Field of application

The present invention relates to a method for the detection and correction of printing defects.

The invention also relates to a system that realizes said method.

In particular, the invention may find useful application in various technological fields where industrial printing is required on surfaces of even large dimensions, for instance in the printing on paper, corrugated cardboard, cardboard, plastic film, thermoplastic sheets; namely in the printing of labels, packaging, signs or even ceramic or assimilable coatings.

### Background art

In all of the fields identified in the previous paragraph, printing devices adopting one or more print heads are used, said print heads being typically side by side to each other, so as to define a fixed printing area below which a printing medium slide.

The above print heads have a plurality of nozzles, each of which is arranged to release a volume of ink that impresses onto the printing medium, realizing an ink point that cooperates with the other ones, so as to define an image.

One of the known problems of the printing devices of the type herein considered relates to the high frequency of malfunction of the single nozzles of the print head, which results in even evident printing defects, such as for example the presence of marked white stripes or in any case with a colour density less than the desired one on the printed image.

Another known printing defect is linked to the tone unevenness among the various nozzles of a single print head and/or among the different print heads which constitute a given colour.

When the presence of the above defects results in an insufficient print quality for the reference application, it is generally necessary to replace the single damaged print head, with significant economic damage due to the relatively high cost of these components.

By the way, the recent technological development of the print heads allows today, at least in some of the high-end models, an extremely precise dosage - in the order of picolitres - of the volume of ink released by each single nozzle. Thanks to said possibility of control, correction systems have been introduced, which mask the printing defect, caused by the defectiveness of one or more nozzles, by modifying the volume of ink dispensed by adjacent nozzles.

However, said control systems, though representing a great improvement with respect to the prior art, realize a pre-set compensation during the testing phase, which does not always ensure optimal print quality in the concrete use.

Another limitation of the digital printing devices according to the prior art is the need to make adjustments for the setup during start-up phase, for instance relating to the overlap of the modules of adjacent nozzles or the alignment of the modules of the different colours. Said adjustments are time-consuming and delay the start of the production phases.

Documents US 2012/050377 A1, US 2018/086049 A1 and US 2014/313255 disclose method for the detection and correction of printing defects according to the prior art.

Therefore, the technical problem underlying the present invention is to improve the quality of the known prior art correction and setup systems, ensuring high print quality over time and significantly extending the useful life of the individual print heads of the digital printing device.

### Summary of the invention

The previously identified technical problem is solved by a method for the detection and correction of printing defects of a digital printing device according to claim 1.

The above outlined method advantageously allows performing a dynamic control of the compensation scheme, adapting it based on the actual printing conditions in use, linked for example to the real operating parameters of the involved specific adjacent nozzles.

On the contrary, the prior art methods apply pre-set and theoretical schemes, derived from a calibration carried out during the testing phase and not repeatable during the useful life of the printing device.

Instead, it should be emphasized how the above described method can be applied both in an initial testing phase, and above all at later times in the device life, for example before a print job.

The method can even be used as a production dynamic control, namely monitoring the print quality and intervening in real time to correct any detected defects.

In a specific example, the method may comprise the identification of at least one defective dispensing nozzle responsible for a printing defect, based on the linear position of said printing defect along the printing area.

In this case, the compensation scheme provides for the dispensing variation of one or more dispensing nozzles close to said defective dispensing nozzle to mask the detected printing defect.

The compensation scheme may concretely result, for instance, in an increase in the ink volumes of one or more nozzles placed close to the defective nozzle: for instance, an amount of additional ink can be set to be dispensed to one or both nozzles which are side by side the defective nozzle along the printing area.

The method may also comprise the identification of other printing defects, besides or alternatively to the identification of the defective dispensing nozzles.

One of these defects is the tone unevenness (a problem known in the field as "banding"). Said defect is always detected as a difference between ideal dispensing pattern and real dispensing pattern: however, in this case, there is not a total lack of a line, but rather a difference in tone which can be punctual or related to an area (group of nozzles or entire print head).

In this case, different alternative compensation schemes can be adopted.

A first compensation scheme provides for the variation of the drop volumes of the nozzles which insist on the areas affected by the defect. This can be done by singularly intervening on the nozzles, analogously to what has been previously described for the defective nozzle correction, or by intervening on parameters (for instance the supply voltage of the piezoelectric actuators) which affect an entire group of dispensing nozzles.

An alternative compensation scheme instead acts on image processing, through the printing RIP, modifying the density of the printing pixels in the areas affected by the phenomenon.

The method may further comprise an acquisition step of specific information related to the setup during start-up phase, so that the elaborated compensation scheme performs said adjustment.

In particular, the specific information may relate to the overlap among modules of adjacent nozzles. It is in fact known that the overlap among modules may cause local defects which result in missing or darkened lines. The detected information, obtained through the printing and the subsequent detection of a specific print test, relates in this case to the optimal choice of the overlapping nozzles, namely the definition of an optimal overlap scheme.

Another information detectable through specific test and useful during setup phase of the printing device relates to the alignment between the modules of dispensing nozzles relating to the different colours.

The same architecture, exploiting the same optical detection system (preferably with CIS sensors), may also be used to get information that enables the digital printing device to be profiled.

As previously mentioned, at least the steps of detecting a printing defect, of elaborating a compensation scheme and of applying the compensation scheme can be performed during a production cycle of the digital printing device.

In particular, the use of the method during the production cycle turns out to be particularly effective for the detection of the unevenness defects ("banding"). In fact, the Applicant has already found out how the system according to the present patent easily allows identifying said defects through the optical monitoring of the printed graphics, even at relatively high speeds (indicatively greater than 80 m/min) used in the production step.

It should also be noted that, in order to apply the method during the production cycle, test graphics may also be used during printing in a printing medium scrap. The analysis of the optical detection system can thus be performed on said test graphics. However, the Applicant has found out that the use of such test graphics is not strictly necessary, since it is also possible to perform the error detection directly on the production graphics.

Advantageously, during the step of modifying said compensation scheme in feedback control, an optimal compensation scheme can be obtained, which is applicable in subsequent printing operations of the digital printing device.

Therefore, said optimal compensation scheme can be stored on a storage medium which is accessible to a control unit of the printing device, so that the scheme can be applied in subsequent printing.

In particular, said step of modifying said compensation scheme in feedback control can be used and repeated to identify a plurality of optimal compensation schemes relating to different levels of grey.

In fact, the compensation will probably be different according to the requested level of grey, namely due to the colour density of the pixels of the ideal printing pattern placed at the defective dispensing nozzle.

Thus, the method according to the present invention, in the presence of a defective nozzle, will identify an alternative compensation scheme for different levels of grey and the digital printing device will then apply the corresponding scheme where the image to be printed has that specific level of grey at the area where the printing defect has been detected.

Obviously, in case of colour printing different groups of nozzles are present, each of which dispenses ink of different colour. The method according to the present invention in this case can be performed consecutively - but preferably still within the same printing - for each of the groups of nozzles.

In a manner *per se* known, one of the ideal printing patterns used to identify and correct the printing defects, preferably performed in a preliminary test phase or in portions of the medium not affected by the graphics printed in production, comprises more portions, subsequently placed along the printing direction, each of which comprises a homogeneous area with a different level of grey. Other ideal printing patterns may comprise pluralities of lines in the feed direction of the printing medium, for identifying the defective nozzles, or still different homogeneous blocks with selective use of the dispensing nozzles placed at the overlapping between the modules of subsequent nozzles of the digital printing device.

Preferably, said optical detection system is provided with a plurality of scanning sensors linearly distributed along the printing area.

Each of said scanning sensors is preferably adapted to linearly discriminate between ink points released by contiguous dispensing nozzles of the print head.

In a possible embodiment, each single scanning sensor is placed in linear correspondence with a single dispensing nozzle.

In an alternative and preferred embodiment, a single scanning sensor is placed in linear correspondence with more adjacent dispensing nozzles (preferably two per sensor) of the print head, said scanning sensors being able to discriminate the ink points related to the adjacent dispensing nozzles.

In this case, in order to discriminate between the different nozzles to identify a possible malfunctioning nozzle, a print test is performed in which the adjacent nozzles are operated at a later time. Thus, the ideal printing pattern will comprise a series of subsequent modules of lines, each line being at a determined dispensing nozzle, the lines corresponding to the adjacent dispensing nozzles in linear correspondence with a single scanning sensor being realized in distinct modules of lines. The number of the subsequent modules of lines is at least equal to the number of nozzles per sensor, while further modules can possibly be used for other evaluations, for instance on the deviated nozzles.

The scanning sensors are preferably CIS sensors.

The previously identified technical problem is also solved by a system for the detection and correction of printing defects of a digital printing device according to claim 14.

It should be noted that the control unit can be mounted onboard the printing device or be external thereto. For instance, it can be an electronic computer interfaced with the digital printing device and with the optical detection system.

Further features and advantages will become more apparent from the following detailed description of two preferred, but not exclusive, embodiments of the present invention, with reference to the enclosed figures given by way of example and not for limiting purposes.

### Brief description of the drawings

Figure 1 schematically shows an ideal printing pattern used by the method and system for the detection and correction of printing defects of a digital printing device according to the present invention;
figure 2 schematically shows a system for the detection and correction of printing defects of the method according to the present invention;
figure 3 schematically shows the system in a correction step of the error detected in the step shown in figure 2;
figure 4 schematically shows a first variant of the system of figure 2, in which in particular the sensors that constitute the optical detection system are highlighted;
figure 5 schematically shows a second variant of the system of figure 2, in which in particular the sensors that constitute the optical detection system are highlighted;
figure 6 schematically shows the system of figure 2 during another detection step of the method according to the present invention;
figure 7 schematically shows the system according to the present invention during a correction step of the error detected in the step shown in figure 6.

### Detailed description

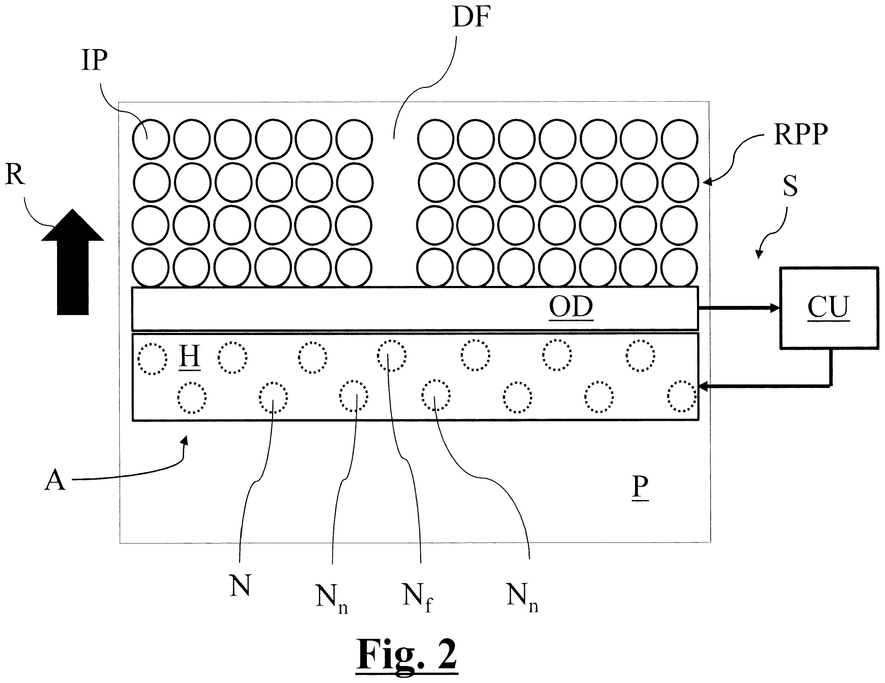

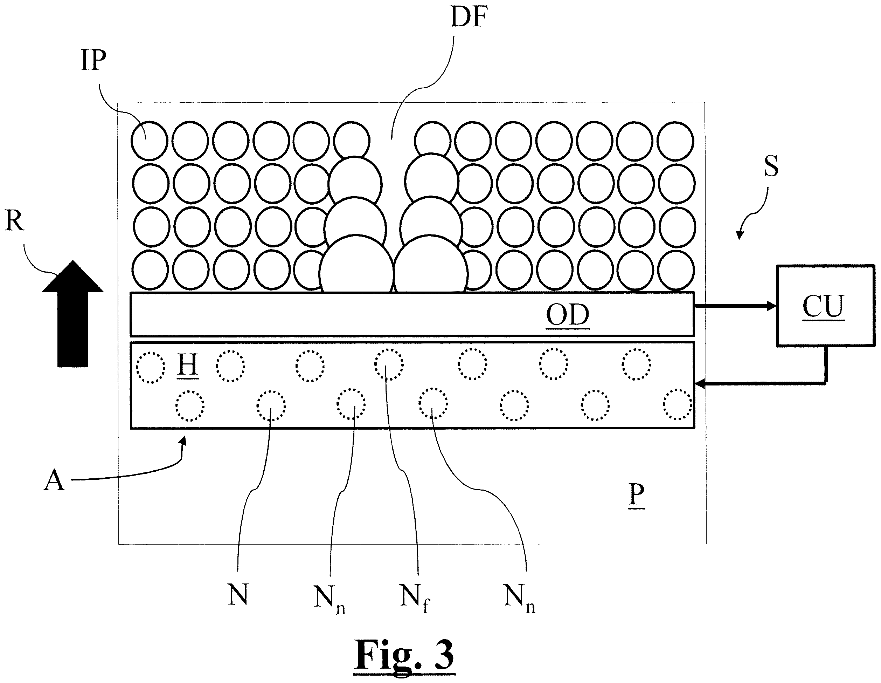

With reference to the enclosed figures 2-7, S generally identifies a system for the detection and correction of printing defects.

The system S comprises in particular a digital printing device A, preferably for flat printing, comprising one or more print heads H which are side by side to each other so as to define a printing area. Preferably, the defined printing area is of a large dimension, in particular equal to or greater than two meters.

For the sake of simplicity of representation, in the enclosed figures a unique print head H is represented.

The print head H, of a *per se* known type, has a plurality of dispensing nozzles N arranged to dispense a volume of ink which is adjustable in a fine manner and in real time. The instantaneous dispensing of a single nozzle N onto a printing medium P locally defines an ink point IP; the different ink points IP cooperate to define a printing image.

The dispensing nozzles N are preferably arranged in an offset manner, for reasons linked to dimensions and to the internal structure of the print head itself. Nevertheless, to each single dispensing nozzle N a specific position on the printing area corresponds, so that said dispensing nozzles N can be ideally considered to be side by side to each other. In the following of the present description, the term "adjacent" related to the dispensing nozzles N refers to said ideal linear arrangement along the printing area.

The system S also comprises means for moving the aforementioned printing medium P, which are arranged for advancing said printing medium P in a feed direction orthogonal to the printing area, herein called printing direction R.

The system S also comprises an optical detection system OD, comprising a plurality of scanning sensors C, preferably of the CIS type, which are linearly side by side to each other along a direction parallel to the printing area.

The optical detection system OD is arranged downstream the digital printing device A and is arranged to acquire the image freshly printed said printing device A.

In particular, it should be noted that the optical detection system OD is able to discriminate the position of the ink points IP deposited by adjacent nozzles.

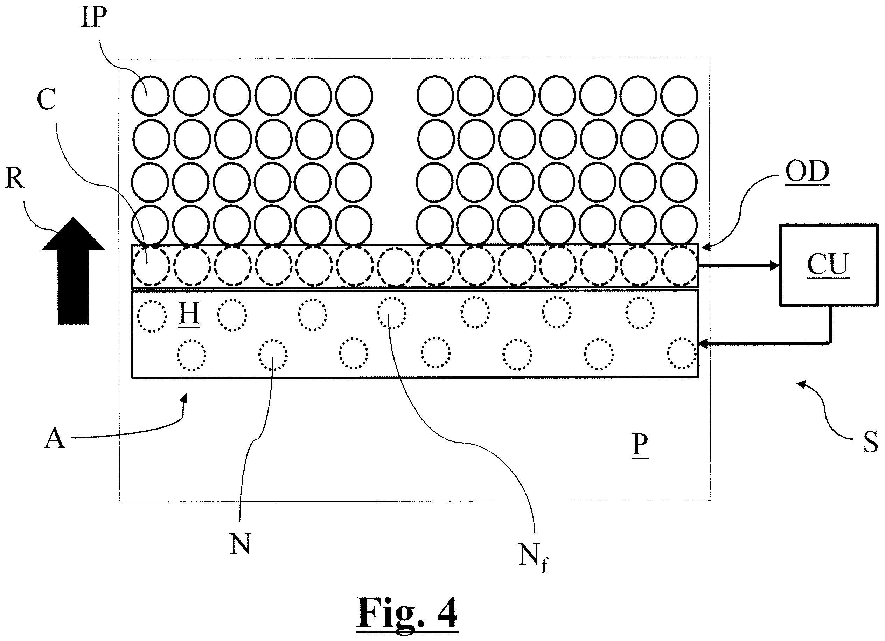

In a first variant, illustrated in figure 4, a single scanning sensor C is arranged at each dispensing nozzle N of the digital printing device A.

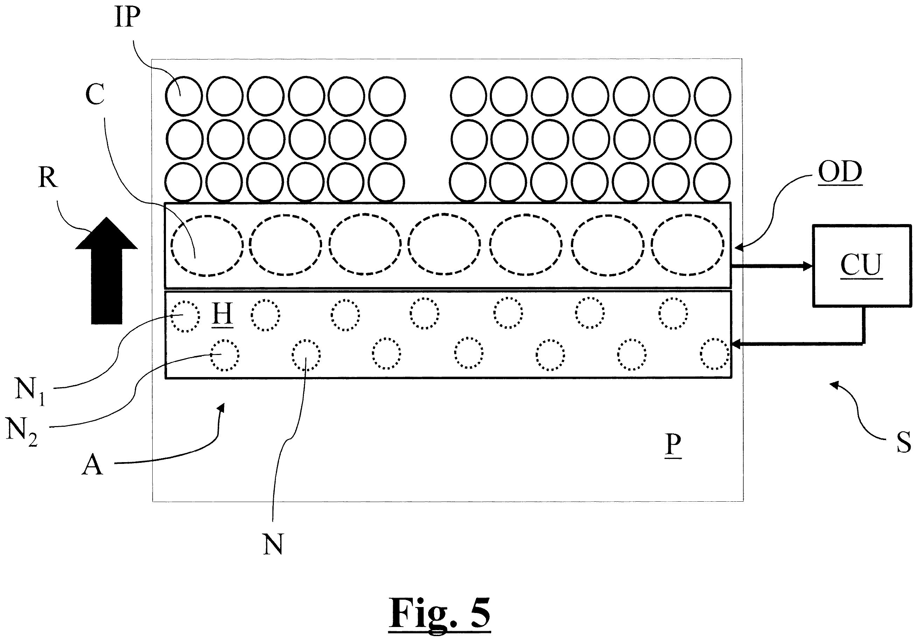

In a second variant, illustrated in figure 5, a scanning sensor C is instead arranged in front of each pair of adjacent dispensing nozzles N₁, N₂, which are offset to each other along the printing direction R.

The system S also comprises a control unit CU, which on the one hand controls the operation of the dispensing nozzles N, on the other hand acquires the signal of the optical detection system OD.

Said control unit CU, which can be realized by one or more computers, by one or more microprocessors or by analogous known devices, may comprise or be connected to a storage medium in which ideal compensation schemes, obtained from the method described below, will be stored.

The above system S is able to perform a method for the detection and correction of printing defects DF, DF2 and/or the setup during start-up phase of the previously described digital printing device.

A first printing defect DF detectable and correctable with the method according to the present invention is the presence of defective dispensing nozzles N_{f}.

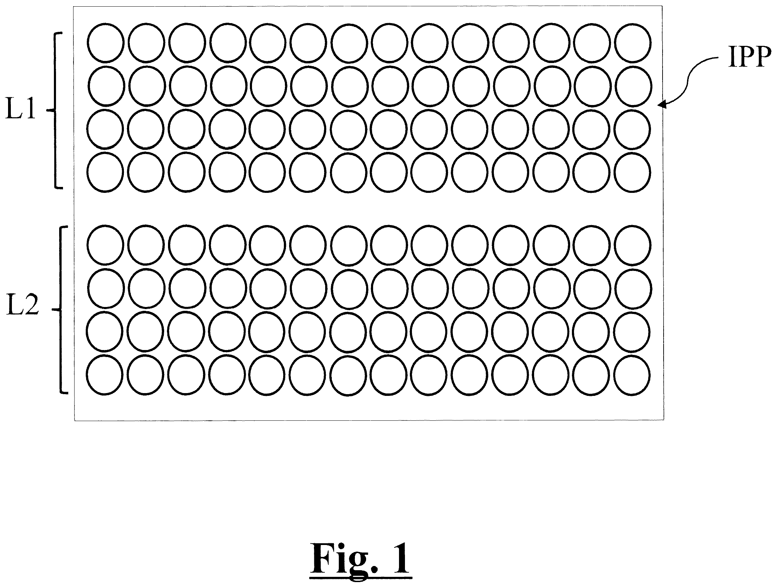

An example of how said defect DF can be detected and corrected is hereinafter provided, with specific reference to figures 1-3.

In a first step, the digital printing device A is controlled to perform a print aimed at identifying and correcting the printing defects DF linked to the presence of defective dispensing nozzles Nε.

Said printing is preferably realized based on an ideal printing pattern IPP, namely a digital image made of a pixel array, illustrated in figure 1.

Said ideal printing pattern IPP comprises a plurality of subsequent bands L1, L2, each band comprising pixels of homogeneous colour intensity, particularly to each band a different level of grey corresponds.

The digital printing device A, as represented in figure 2, will thus print a real printing pattern RPP defined by the deposition of the ink points IP onto the printing medium P.

At defective dispensing nozzles Nε, the real printing pattern RPP will locally have a printing defect DF, represented in this case by a missing column or having a colour density less than the one of the corresponding area of the ideal printing pattern IPP.

Through the optical detection system OD, the control unit CU is able to identify the specific defective dispensing nozzle Nε.

In the specific case of the variant of figure 4, the position of the defective dispensing nozzle Nε is immediately deducible from the position of the scanning sensor C which detects the defect.

Instead, in the case of the variant of figure 5, it will be preferable to perform a different or further print test in which the two dispensing nozzles relating to each single sensor C are made to print - preferably: continuous lines - in two subsequent steps. In this way, the sensor resolution will be sufficient to identify the defective nozzle Nε in a timely manner.

Once the defective dispensing nozzle Nε has been identified, the control unit CU modifies the dispensing of the nozzles based on an initial compensation scheme, which substantially reassigns the volume of ink attributed to the defective dispensing nozzle Nε distributing it to the adjacent dispensing nozzles N₁, N₂.

At this point, in a preferred embodiment with error feedback control, the optical detection system OD continues its acquisition and will detect a real printing pattern RPP modified by the compensation scheme.

The control unit CU goes back comparing said real printing pattern RPP with the expected result, i.e. with the ideal printing pattern IPP.

Depending on the residual discrepancies, said control unit CU will modify the adopted compensation scheme and so on, until an acceptable overlap between real printing pattern RPP and ideal printing pattern IPP is achieved.

Thus, a feedback control of the adopted compensation scheme is carried out, which advantageously allows achieving an optimal compensation for each single printing defect DF that has been found.

In another embodiment, the compensation scheme can be adopted without a further feedback control, for instance during a production cycle following a preliminary detection printing.

A second printing defect DF2 detectable and correctable with the method according to the present invention is the presence of banding, i.e. areas having tone unevenness.

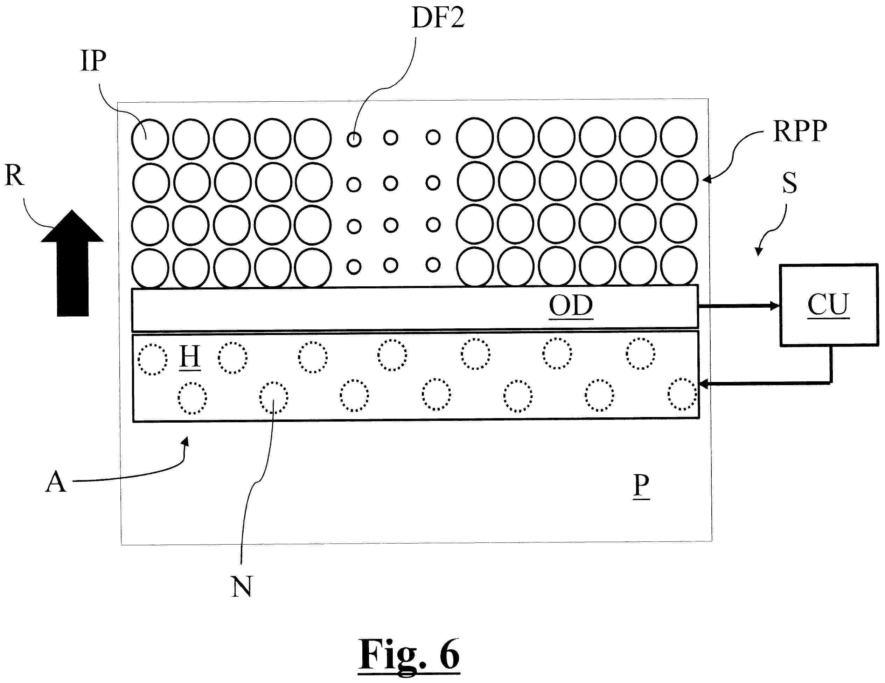

An example of how said defect DF can be detected and corrected is hereinafter provided, with specific reference to figures 6-7.

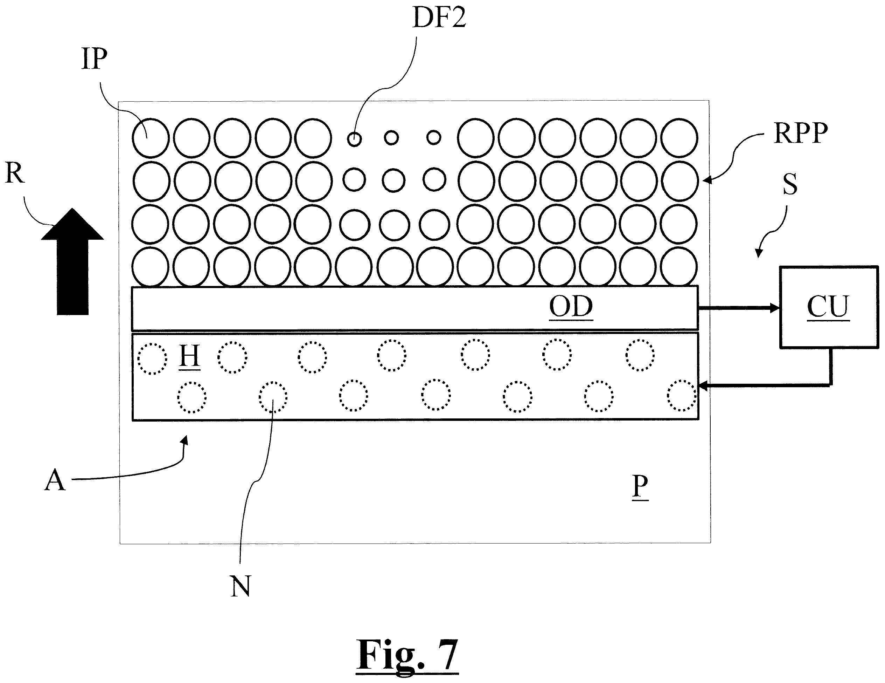

In this case, the defect detection illustrated in figure 6 leads to a correction of the drop volume assigned to the dispensing nozzles N in the area affected by the phenomenon, thus realizing the correction visible in figure 7.

Other correction systems of banding can be employed, as widely described in the summary of the present invention.

The method and device according to the present invention are moreover able to detect, still with excellent performances and the possibility of a real time correction, other printing defects known in the field, besides automatically performing the setup of the printing device during a start-up phase.

The scope of protection of the invention is defined by the following claims.

## Claims

1. Method for the detection and correction of printing defects (DF, DF2) of a digital printing device (A) comprising the following steps:
- arranging a digital printing device (A) equipped with one or more print heads (H) with a plurality of dispensing nozzles (N) placed along a printing area;
- arranging an optical detection system (OD), placed next to said printing area with reference to a printing direction (R);
- controlling said plurality of dispensing nozzles (N) for dispensing ink onto a printing medium (P), relatively movable with respect to said printing area, said dispensing being performed based on a predefined ideal printing pattern (IPP) comprising one or more levels of grey (L1, L2), said dispensing realizing a real printing pattern (RPP) on said printing medium (P);
- acquiring the real printing pattern (RPP) through said optical detection system (OD);
- detecting
at least one printing defect (DF, DF2) defined by a difference of said real printing pattern (RPP) acquired by the optical detection system (OD) with respect to said ideal printing pattern (IPP);
- elaborating, on board a control unit of the digital printing device, at least one compensation scheme to mask a detected printing defect (DF, DF2)
- applying said compensation scheme during the realization of said real printing pattern (RPP);
- after realizing the real printing pattern (RPP) with the applied compensation scheme, acquiring again the real printing pattern (RPP) through said optical detection system (OD);
- modifying said compensation scheme in feedback control to make the visual appearance of said real printing pattern (RPP) similar to the visual appearance of said ideal printing pattern (IPP);
**characterized in that** said feedback control step is employed to monitor in real time, during a production cycle, whether the compensation scheme defines an acceptable correction.

2. Method for the detection and correction of printing defects (DF, DF2) of a digital printing device (A) according to claim 1, wherein at the end of the step of modifying said compensation scheme in feedback control, an optimal compensation scheme is obtained, which is applicable in subsequent printing operations of the digital printing device (A).

3. Method for the detection and correction of printing defects (DF, DF2) of a digital printing device (A) according to one of the previous claims, wherein the step of detecting at least one printing defect (DF) comprises the sub-step of identifying at least one defective dispensing nozzle (N_{f}) responsible for the printing defect (DF), and wherein the elaborated compensation scheme provides for the dispensing variation of one or more dispensing nozzles (Nₙ) close to said defective dispensing nozzle (Nf).

4. Method for the detection and correction of printing defects (DF, DF2) of a digital printing device (A) according to one of the previous claims, wherein the step of detecting at least one printing defect (DF2) comprises the sub-step of identifying a tone unevenness (DF2) in the real printing pattern (RPP).

5. Method for the detection and correction of printing defects (DF, DF2) of a digital printing device (A) according to claim 4, wherein the elaborated compensation scheme provides for the dispensing variation of one or more dispensing nozzles at the area affected by the tone unevenness (DF2), by intervening on the drop volume assigned to the single dispensing nozzles (N) or on printing head adjustment parameters that affect an entire module of dispensing nozzles (N).

6. Method for the detection and correction of printing defects (DF, DF2) of a digital printing device (A) according to claim 4, wherein the elaborated compensation scheme acts on the image processing, through the printing RIP, modifying the density of the printing pixels in the areas affected by the tone unevenness (DF2).

7. Method for the detection and correction of printing defects (DF, DF2) of a digital printing device (A) according to one of the previous claims, further comprising a step of detecting at least one setup information starting from the analysis of said real printing pattern (RPP), and a step of setting up the device during start-up phase based on said detected setup information, wherein the detected setup information starting from the analysis of said real printing pattern (RPP) is an information on the overlap between the different adjacent modules of dispensing nozzles (N) and/or the alignment between the different modules of dispensing nozzles (N) related to the different colours.

8. Method for the detection and correction of printing defects (DF, DF2) of a digital printing device (A) according to one of the previous claims, wherein at least the steps of detecting a printing defect, of elaborating a compensation scheme and of applying the compensation scheme can be carried out during a production cycle of the digital printing device.

9. Method for the detection and correction of printing defects (DF, DF2) of a digital printing device (A) according to claim 8, wherein during the production cycle the feed speed of the printing medium (P) with respect to the printing area is greater than 80 m/min.

10. Method for the detection and correction of printing defects (DF, DF2) of a digital printing device (A) according to one of the previous claims, wherein said optical detection system (OD) provides for a plurality of scanning sensors (C) which are linearly distributed along the printing area.

11. Method for the detection and correction of printing defects (DF, DF2) of a digital printing device (A) according to claim 10, wherein a single scanning sensor (C) is placed in linear correspondence with a single dispensing nozzle (N).

12. Method for the detection and correction of printing defects (DF, DF2) of a digital printing device (A) according to claim 10, wherein a single scanning sensor (C) is placed in linear correspondence with two or more adjacent dispensing nozzles (N₁, N₂) of the print head (H), said ideal printing pattern (RPP) comprising two or more subsequent modules of lines, each line being at a determined dispensing nozzle (N), the lines corresponding to the adjacent dispensing nozzles (N₁, N₂) in a linear correspondence with a single scanning sensor (C) being realized in distinct modules of lines.

13. Method for the detection and correction of printing defects (DF, DF2) of a digital printing device (A) according to claims 10-12, wherein said scanning sensors (C) are CIS sensors.

14. System (S) for the detection and correction of printing defects (DF, DF2) of a digital printing device (A) comprising:
- a digital printing device (A) equipped with one or more print heads (H) with a plurality of dispensing nozzles (N) placed along a printing area, arranged to dispense ink onto a printing medium (P), relatively movable with respect to said printing area, based on a predefined ideal printing pattern (IPP) comprising one or more levels of grey (L1, L2), realizing a real printing pattern (RPP) on said printing medium (P);
- an optical detection system (OD), placed next to said printing area with reference to a printing direction (R), arranged to acquire the real printing pattern (RPP);
- a control unit (CU) arranged for:
- detecting:
° at least one printing defect (DF, DF2) defined by a difference of said real printing pattern (RPP) acquired by the optical detection system (OD) with respect to said ideal printing pattern (IPP)
- elaborating, on board a control unit digital printing device, at least one compensation scheme to mask a detected printing defect (DF, DF2);
- applying said compensation scheme during the realization of said real printing pattern (RPP);
- after realizing the real printing pattern (RPP) with the applied compensation scheme, acquiring again the real printing pattern (RPP) through said optical detection system (OD);
- modifying said compensation scheme in feedback control to make the visual appearance of said real printing pattern (RPP) similar to the visual appearance of said ideal printing pattern (IPP); **characterized in that** said feedback control step is employed to monitor in real time, during a production cycle, whether the compensation scheme defines an acceptable correction.

## Patentansprüche

1. Verfahren zur Erfassung und Korrektur von Druckmängeln (DF, DF2) einer digitalen Druckvorrichtung (A) mit den folgenden Schritten:
- Anordnen einer digitalen Druckvorrichtung (A), die mit einem oder mehreren Druckköpfen (H) mit einer Mehrzahl von Dispensdüsen (N), die entlang eines Druckbereichs platziert sind, ausgerüstet ist;
- Anordnen eines optischen Erfassungssystems (OD), das neben dem Druckbereich mit Bezug zu einer Druckrichtung (R) platziert ist;
- Steuern der Mehrzahl von Dispensdüsen (N), um Tinte auf ein Druckmedium (P) abzugeben, das relativ zu dem Druckbereich bewegbar ist, wobei das Abgeben basierend auf einem vorbestimmten idealen Druckmuster (IPP), das eine oder mehrere Graustufen (L1, L2) aufweist, durchgeführt wird, wobei das Abgeben ein reales Druckmuster (RPP) auf dem Druckmedium (P) realisiert;
- Erfassen des realen Druckmusters (RPP) mit dem optischen Erfassungssystem (OD);
- Erfassen
mindestens eines Druckmangels (DF, DF2), der durch einen Unterschied des mit dem optischen Erfassungssystem (OD) erfassten, realen Druckmusters (RPP) bezüglich des idealen Druckmusters (IPP) bestimmt ist;
- Ausarbeiten, in einer Steuerungseinheit der digitalen Druckvorrichtung, mindestens eines Kompensationsschemas, um einen erfassten Druckmangel (DF, DF2) zu maskieren;
- Anwenden des Kompensationsschemas während der Realisierung des realen Druckmusters (RPP);
- nach dem Realisieren des realen Druckmusters (RPP) mit dem angewendeten Kompensationsschema, erneut Erfassen des realen Druckmusters (RPP) mit dem optischen Erfassungssystem (OD);
- Modifizieren des Kompensationsschemas durch Regelung, um die visuelle Erscheinung des realen Druckmusters (RPP) der visuellen Erscheinung des idealen Druckmusters (IPP) ähnlich zu machen;
**dadurch gekennzeichnet, dass** der Regelungsschritt angewendet wird, um in Echtzeit während eines Produktionszyklus zu überwachen, ob das Kompensationsschema eine akzeptable Korrektur festlegt.

2. Verfahren zur Erfassung und Korrektur von Druckmängeln (DF, DF2) einer digitalen Druckvorrichtung (A) nach Anspruch 1, bei dem am Ende des Schrittes des Modifizierens des Kompensationsschemas durch Regelung ein optimales Kompensationsschema erhalten wird, das in nachfolgenden Druckvorgängen der digitalen Druckvorrichtung (A) anwendbar ist.

3. Verfahren zur Erfassung und Korrektur von Druckmängeln (DF, DF2) einer digitalen Druckvorrichtung (A) nach einem der vorhergehenden Ansprüche, bei dem der Schritt des Erfassens mindestens eines Druckmangels (DF) den Unterschritt des Ermittelns mindestens einer defekten Dispensdüse (N_{f}), die für den Druckmangel verantwortlich ist, enthält, und bei dem das ausgearbeitete Kompensationsschema für die Abgabeänderung von einer oder mehreren Dispensdüsen (Nₙ) nahe der defekten Dispensdüse (N_{f}) sorgt.

4. Verfahren zur Erfassung und Korrektur von Druckmängeln (DF, DF2) einer digitalen Druckvorrichtung (A) nach einem der vorhergehenden Ansprüche, bei dem der Schritt des Erfassens mindestens eines Druckmangels (DF2) den Unterschritt des Ermittelns einer Tonungleichheit (DF2) in dem realen Druckmuster (RPP) enthält.

5. Verfahren zur Erfassung und Korrektur von Druckmängeln (DF, DF2) einer digitalen Druckvorrichtung (A) nach Anspruch 4, bei dem das ausgearbeitete Kompensationsschema für die Abgabeänderung von einer oder mehreren Dispensdüsen in dem von der Tonungleichheit (DF2) betroffenen Bereich durch Eingreifen an dem den einzelnen Dispensdüsen (N) zugeordneten Tropfenvolumen oder an den Druckkopfeinstellungsparametern, die ein ganzes Modul von Dispensdüsen (N) beeinflussen, sorgt.

6. Verfahren zur Erfassung und Korrektur von Druckmängeln (DF, DF2) einer digitalen Druckvorrichtung (A) nach Anspruch 4, bei dem das ausgearbeitete Kompensationsschema auf die Bildverarbeitung durch den Druck-RIP wirkt, wobei die Dichte der Druckpixel in dem von der Tonungleichheit (DF2) betroffenen Bereichen verändert wird.

7. Verfahren zur Erfassung und Korrektur von Druckmängeln (DF, DF2) einer digitalen Druckvorrichtung (A) nach einem der vorhergehenden Ansprüche, ferner mit einem Schritt des Erfassens mindestens einer Einrichtungsinformation ausgehend von der Analyse des realen Druckmusters (RPP) und einem Schritt des Einrichtens der Vorrichtung während der Anlaufphase basierend auf der erfassten Einrichtungsinformation, wobei die erfasste Einrichtungsinformation ausgehend von der Analyse des realen Druckmusters (RPP) eine Information über die Überlappung zwischen den verschiedenen benachbarten Modulen von Dispensdüsen (N) und/oder die Ausrichtung zwischen den verschiedenen Modulen von Dispensdüsen (N) bezogen auf die verschiedenen Farben ist.

8. Verfahren zur Erfassung und Korrektur von Druckmängeln (DF, DF2) einer digitalen Druckvorrichtung (A) nach einem der vorhergehenden Ansprüche, bei dem mindestens die Schritte des Erfassens eines Druckmangels, des Ausarbeitens eines Kompensationsschemas und des Anwendens des Kompensationsschemas während eines Produktionszyklus der digitalen Druckvorrichtung durchgeführt werden können.

9. Verfahren zur Erfassung und Korrektur von Druckmängeln (DF, DF2) einer digitalen Druckvorrichtung (A) nach Anspruch 8, bei dem während des Produktionszyklus die Vorschubgeschwindigkeit des Druckmediums (P) bezüglich des Druckbereichs größer als 80 m/min ist.

10. Verfahren zur Erfassung und Korrektur von Druckmängeln (DF, DF2) einer digitalen Druckvorrichtung (A) nach einem der vorhergehenden Ansprüche, bei dem das optische Erfassungssystem (OD) eine Vielzahl von Abtastsensoren (C) bereitstellt, die linienförmig entlang des Druckbereichs verteilt sind.

11. Verfahren zur Erfassung und Korrektur von Druckmängeln (DF, DF2) einer digitalen Druckvorrichtung (A) nach Anspruch 10, bei dem ein einzelner Abtastsensor (C) in linienförmiger Übereinstimmung mit einer einzelnen Dispensdüse (N) platziert ist.

12. Verfahren zur Erfassung und Korrektur von Druckmängeln (DF, DF2) einer digitalen Druckvorrichtung (A) nach Anspruch 10, bei dem ein einzelner Abtastsensor (C) in linienförmiger Übereinstimmung mit zwei oder mehr benachbarten Dispensdüsen (N₁, N₂) des Druckkopfes (H) platziert ist, wobei das ideale Druckmuster (RPP) zwei oder mehr nachfolgende Linienmodule aufweist, wobei jede Linie an einer bestimmten Dispensdüse (N) ist, wobei die mit den benachbarten Dispensdüsen (N₁, N₂) in einer linienförmigen Übereinstimmung mit einem einzelnen Abtastsensor (C) übereinstimmenden Linien in verschiedenen Linienmodulen realisiert sind.

13. Verfahren zur Erfassung und Korrektur von Druckmängeln (DF, DF2) einer digitalen Druckvorrichtung (A) nach den Ansprüchen 10 - 12, bei dem die Abtastsensoren (C) CIS-Sensoren sind.

14. System (S) für die Erfassung und Korrektur von Druckmängeln (DF, DF2) einer digitalen Druckvorrichtung (A), mit:
- einer digitalen Druckvorrichtung (A), die mit einem oder mehreren Druckköpfen (H) mit einer Mehrzahl von entlang eines Druckbereichs platzierten Dispensdüsen (N) ausgerüstet ist, die angeordnet sind, um Tinte auf ein Druckmedium (P), das relativ zu dem Druckbereich bewegbar ist, basierend auf einem vorbestimmten idealen Druckmuster (IPP), das eine oder mehrere Graustufen (L1, L2) aufweist, abzugeben, wobei ein reales Druckmuster (RPP) auf dem Druckmedium (P) realisiert wird,
- einem neben dem Druckbereich mit Bezug zu einer Druckrichtung (R) platzierten optischen Erfassungssystem (OD), das angeordnet ist, um das reale Druckmuster (RPP) zu erfassen;
- einer Steuerungseinheit (CU), die ausgebildet ist zum:
- Erfassen
mindestens eines Druckmangels (DF, DF2), der durch einen Unterschied des mit dem optischen Erfassungssystem (OD) erfassten, realen Druckmusters (RPP) bezüglich des idealen Druckmusters (IPP) bestimmt ist;
- Ausarbeiten, in einer digitalen Druckvorrichtung-Steuerungseinheit, mindestens eines Kompensationsschemas, um einen erfassten Druckmangel (DF, DF2) zu maskieren;
- Anwenden des Kompensationsschemas während der Realisierung des realen Druckmusters (RPP);
- nach dem Realisieren des realen Druckmusters (RPP) mit dem angewendeten Kompensationsschema, erneuten Erfassen des realen Druckmusters (RPP) mit dem optischen Erfassungssystem (OD);
- Modifizieren des Kompensationsschemas durch Regelung, um die visuelle Erscheinung des realen Druckmusters (RPP) der visuellen Erscheinung des idealen Druckmusters (IPP) ähnlich zu machen;
**dadurch gekennzeichnet, dass** der Regelungsschritt angewendet wird, um in Echtzeit während eines Produktionszyklus zu überwachen, ob das Kompensationsschema eine akzeptable Korrektur festlegt.

## Revendications

1. Procédé de détection et de correction de défauts d'impression (DF, DF2) d'un dispositif d'impression numérique (A) comprenant les étapes suivantes :
- le fait de prévoir un dispositif d'impression numérique (A) équipé d'une ou plusieurs tête(s) d'impression (H) avec une pluralité de buses de distribution (N) placées le long d'une zone d'impression ;
- le fait de prévoir un système de détection optique (OD), placé près de ladite zone d'impression en référence à une direction d'impression (R) ;
- le contrôle de ladite pluralité de buses de distribution (N) destinées à distribuer de l'encre à un support d'impression (P), relativement mobiles par rapport à ladite zone d'impression, ladite distribution étant effectuée sur la base d'un motif d'impression idéal prédéfini (IPP) comprenant un ou plusieurs niveau(x) de gris (L1, L2), ladite distribution réalisant un motif d'impression réel (RPP) sur ledit support d'impression (P) ;
- l'acquisition du motif d'impression réel (RPP) par le biais dudit système de détection optique (OD) ;
- la détection d'au moins un défaut d'impression (DF, DF2) défini par une différence dudit motif d'impression réel (RPP) acquis par le système de détection optique (OD) par rapport audit motif d'impression idéal (IPP) ;
- l'élaboration, sur une unité de commande du dispositif d'impression numérique, d'au moins un modèle de compensation afin de masquer un défaut d'impression détecté (DF, DF2),
- l'application dudit modèle de compensation pendant la réalisation dudit motif d'impression réel (RPP) ;
- après la réalisation du motif d'impression réel (RPP) avec le modèle de compensation appliqué, l'acquisition, à nouveau, du motif d'impression réel (RPP) par le biais dudit système de détection optique (OD) ;
- la modification dudit modèle de compensation dans une commande à asservissement afin de rendre l'apparence visuelle dudit motif d'impression réel (RPP) similaire à l'apparence visuelle dudit motif d'impression idéal (IPP) ;
**caractérisé en ce que** ladite étape de commande à asservissement est utilisée pour surveiller, en temps réel, pendant un cycle de production, si le modèle de compensation définit une correction acceptable.

2. Procédé de détection et de correction de défauts d'impression (DF, DF2) d'un dispositif d'impression numérique (A) selon la revendication 1, dans lequel, à la fin de l'étape de modification dudit modèle de compensation dans la commande d'asservissement, un modèle de compensation optimal est obtenu, et est applicable lors des opérations d'impression suivantes du dispositif d'impression numérique (A).

3. Procédé de détection et de correction de défauts d'impression (DF, DF2) d'un dispositif d'impression numérique (A) selon l'une des revendications précédentes, dans lequel l'étape de détection d'au moins un défaut d'impression (DF) comprend la sous-étape d'identification d'au moins une buse de distribution défectueuse (N_{f}) responsable du défaut d'impression (DF), et dans lequel le modèle de compensation élaboré assure la variation de distribution d'une ou plusieurs buse(s) de distribution (Nₙ) proche(s) de ladite buse de distribution défectueuse (N_{f}).

4. Procédé de détection et de correction de défauts d'impression (DF, DF2) d'un dispositif d'impression numérique (A) selon l'une des revendications précédentes, dans lequel l'étape de détection d'au moins un défaut d'impression (DF2) comprend la sous-étape d'identification d'une irrégularité de teinte (DF2) sur le motif d'impression réel (RPP).

5. Procédé de détection et de correction de défauts d'impression (DF, DF2) d'un dispositif d'impression numérique (A) selon la revendication 4, dans lequel le modèle de compensation élaboré prévoit la variation de distribution d'une ou plusieurs buse(s) de distribution au niveau de la zone affectée par l'irrégularité de teinte (DF2), en intervenant sur le volume de gouttes affecté aux buses de distribution (N) ou sur les paramètres de réglage de la tête d'impression qui affectent un module entier de buses de distribution (N).

6. Procédé de détection et de correction de défauts d'impression (DF, DF2) d'un dispositif d'impression numérique (A) selon la revendication 4, dans lequel le modèle de compensation élaboré agit sur le traitement d'image, par le biais du RIP d'impression, en modifiant la densité des pixels d'impression dans les zones affectées par l'irrégularité de teinte (DF2).

7. Procédé de détection et de correction de défauts d'impression (DF, DF2) d'un dispositif d'impression numérique (A) selon l'une des revendications précédentes, comprenant en outre une étape de détection d'au moins une information de paramétrage en partant de l'analyse dudit motif d'impression réel (RPP), et une étape de réglage du dispositif pendant la phase de démarrage sur la base de ladite information de paramétrage détectée, dans lequel l'information de paramétrage détectée en partant de l'analyse dudit motif d'impression réel (RPP) est une information sur le chevauchement entre les différents modules adjacents de buses de distribution (N) et/ou l'alignement entre les différents modules de buses de distribution (N) liés aux différentes couleurs.

8. Procédé de détection et de correction de défauts d'impression (DF, DF2) d'un dispositif d'impression numérique (A) selon l'une des revendications précédentes, dans lequel au moins les étapes de détection d'un défaut d'impression, d'élaboration d'un modèle de compensation et d'application du modèle de compensation peuvent être exécutées pendant un cycle de production du dispositif d'impression numérique.

9. Procédé de détection et de correction de défauts d'impression (DF, DF2) d'un dispositif d'impression numérique (A) selon la revendication 8, dans lequel, pendant le cycle de production, la vitesse d'alimentation du support d'impression (P) par rapport à la zone d'impression est supérieure à 80 m/min.

10. Procédé de détection et de correction de défauts d'impression (DF, DF2) d'un dispositif d'impression numérique (A) selon l'une des revendications précédentes, dans lequel ledit système de détection optique (OD) prévoit une pluralité de capteurs de balayage (C) qui sont répartis linéairement le long de la zone d'impression.

11. Procédé de détection et de correction de défauts d'impression (DF, DF2) d'un dispositif d'impression numérique (A) selon la revendication 10, dans lequel un seul capteur de balayage (C) est placé en correspondance linéaire avec une seule buse de distribution (N).

12. Procédé de détection et de correction de défauts d'impression (DF, DF2) d'un dispositif d'impression numérique (A) selon la revendication 10, dans lequel un seul capteur de balayage (C) est placé en correspondance linéaire avec deux buses de distribution adjacentes (N₁, N₂) ou plus de la tête d'impression (H), ledit motif d'impression idéal (RPP) comprenant deux modules de lignes suivants ou plus, chaque ligne se trouvant au niveau d'une buse de distribution déterminée (N), les lignes correspondant aux buses de distribution adjacentes (N₁, N₂) en correspondance linéaire avec un seul capteur de balayage (C) réalisé dans des modules distincts de lignes.

13. Procédé de détection et de correction de défauts d'impression (DF, DF2) d'un dispositif d'impression numérique (A) selon les revendications 10 à 12, dans lequel lesdits capteurs de balayage (C) sont des capteurs CIS.

14. Système (S) de détection et de correction de défauts d'impression (DF, DF2) d'un dispositif d'impression numérique (A) comprenant :
- un dispositif d'impression numérique (A) équipé d'une ou plusieurs tête(s) d'impression (H) avec une pluralité de buses de distribution (N) placées le long d'une zone d'impression, prévues pour distribuer de l'encre à un support d'impression (P), relativement mobiles par rapport à ladite zone d'impression, sur la base d'un motif d'impression idéal prédéfini (IPP) comprenant un ou plusieurs niveau(x) de gris (L1, L2), en réalisant un motif d'impression réel (RPP) sur ledit support d'impression (P) ;
- un système de détection optique (OD), placé près de ladite zone d'impression en référence à une direction d'impression (R), prévu pour acquérir le motif d'impression réel (RPP) ;
- une unité de commande (CD) prévue pour :
- détecter :
au moins un défaut d'impression (DF, DF2) défini par une différence dudit motif d'impression réel (RPP) acquis par le système de détection optique (OD) par rapport audit motif d'impression idéal (IPP),
- élaborer, sur une unité de commande du dispositif d'impression numérique, au moins un modèle de compensation afin de masquer un défaut d'impression détecté (DF, DF2) ;
- appliquer ledit modèle de compensation pendant la réalisation dudit motif d'impression réel (RPP) ;
- après la réalisation du motif d'impression réel (RPP) avec le modèle de compensation appliqué, acquérir, à nouveau, le motif d'impression réel (RPP) par le biais dudit système de détection optique (OD) ;
- modifier ledit modèle de compensation dans une commande à asservissement afin de rendre l'apparence visuelle dudit motif d'impression réel (RPP) similaire à l'apparence visuelle dudit motif d'impression idéal (IPP) ;
**caractérisé en ce que** ladite étape de commande à asservissement est utilisée pour surveiller, en temps réel, pendant un cycle de production, si le modèle de compensation définit une correction acceptable.
